# EUROPÄISCHE PATENTSCHRIFT

(11) **EP 3 446 989 B1**
(45) Veröffentlichungstag und Bekanntmachung des Hinweises auf die Patenterteilung: **13.09.2023**
(21) Anmeldenummer: 18173294.2
(22) Anmeldetag: 18.05.2018
(51) Int. Cl.: B65B 31/02, B29B 13/02, B29C 51/42, B65B 31/04, B65B 47/00, B65B 51/14, B65B 61/00, B65B 61/06, B65B 7/16, B65B 9/04, B65B 11/52, B65D 75/58, B65D 81/20, B65B 25/06, B65D 75/30, B65D 75/32, B65D 77/20, B65B 51/10

(54) **VERPACKUNGSMASCHINE ZUR HERSTELLUNG EINER MEHRLAGENPACKUNG**
PACKAGING MACHINE FOR PRODUCING MULTI-LAYER PACKAGING
MACHINE D'EMBALLAGE DESTINÉE À LA FABRICATION D'UN EMBALLAGE MULTICOUCHE

(30) Priorität: 22.05.2017 DE 102017208665
(43) Veröffentlichungstag der Anmeldung: 27.02.2019
(73) Patentinhaber: GEA Food Solutions Germany GmbH, 35216 Biedenkopf-Wallau (DE)
(72) Erfinder: FEISEL, Jörg, 35216 Biedenkopf-Weifenbach (DE)
(74) Vertreter: Kutzenberger Wolff & Partner

(56) Entgegenhaltungen:
- EP-A1- 2 594 496
- EP-A1- 2 860 118
- WO-A1-87/02965
- WO-A1-03/009709
- WO-A1-2005/123511
- DE-A1-102015 205 221
- US-A- 5 629 060

## Beschreibung

Die vorliegende Erfindung betrifft eine Verpackungsmaschine mit:
- einer Formstation, die eine Verpackungsmulde in eine Folienbahn einformt,
- einem ersten Einleger, der die Verpackungsmulde mit einem ersten Verpackungsgut befüllt und
- einer ersten Siegelstation, die eine Folienbahn in einem ersten Verbindungsbereich an die Folienbahn siegelt und die ein Oberwerkzeug und ein Unterwerkzeug aufweist, wobei mindestens ein Werkzeug einen beheizten Teil aufweist und die mit einem Schneidmittel versehen ist.

Verpackungen weisen heutzutage oftmals mehrere Produkte auf, die durch eine Mittenfolienbahn voneinander getrennt sind. Derartige Verpackungen werden als Mehrlagenfolienverpackungen bezeichnet. Die DE 10 2005 048 491 B4 offenbart eine Verpackungsmaschine um eine derartige Mehrlagenfolienverpackung herzustellen. Diese Verpackungsmaschine bietet jedoch nicht die Möglichkeit, die Mittelfolienbahn sicher zu durchtrennen. EP 2 594 496 A1 offenbart eine Tiefziehverpackungsmaschine mit einer Siegelstation und einem Schneidmesser.

Es war deshalb die Aufgabe der vorliegenden Erfindung eine Verpackungsmaschine und ein Verfahren zur Verfügung zu stellen, die die Nachteile des Standes der Technik nicht aufweisen.

Gelöst wird die Aufgabe mit einer Verpackungsmaschine gemäß dem unabhängigen Vorrichtungsanspruch 1.

Die vorliegende Erfindung betrifft eine Verpackungsmaschine mit einer Formstation, die in eine Folienbahn, insbesondere eine Kunststofffolienbahn, die sogenannte Unterfolienbahn eine Verpackungsmulde, insbesondere durch Tiefziehen, formt. Vorzugsweise werden mehrere Verpackungsmulden gleichzeitig hergestellt. Vorzugsweise arbeitet die Verpackungsmaschine taktweise und besonders bevorzugt wird bei jedem Takt ein Format von mehreren Verpackungsmulden bestehend aus mindestens einer Reihe und mindestens einer Spalte hergestellt. Dieses Format wird dann bei nachfolgenden Takten weiterverarbeitet, bis die mit einem Verpackungsgut befüllte Verpackung fertiggestellt ist. Die mindestens eine Verpackungsmulde wird stromabwärts von der Formstation von einem ersten Einleger mit einem ersten Verpackungsgut befüllt.

Danach wird die Verpackungsmulde, insbesondere ein erster Aufnahmebereich, der insbesondere nur ein Teilvolumen des gesamten Aufnahmevolumens der Verpackungsmulde umfasst, mit einer Folienbahn, insbesondere der sogenannten Mittelfolienbahn, verschlossen, beispielsweise indem diese Folienbahn an die Folienbahn, in die die Verpackungsmulde(n) geformt ist/sind, zumindest abschnittsweise gesiegelt wird. Bei der Folienbahn, die an die Verpackungsmulde gesiegelt wird kann es sich um eine schrumpffähige Folienbahn und/oder eine sogenannte Skinfolienbahn handeln und/oder eine Folienbahn, die beispielsweise durch monoaxiales oder biaxiales Recken schrumpffähig gemacht wird. Die Folienbahn kann vor dem Schrumpfen plastisch und/oder elastisch geformt werden. Durch das Schrumpfen und/oder Recken umschließt die Folienbahn das eingeschlossene Verpackungsgut eng und presst es gegebenenfalls gegen die Verpackungsmulde. Die Folienbahn kann alternativ oder zusätzlich plan oder im Wesentlichen plan oder zumindest lokal geformt sein, wobei die Verformung in eine oder zwei Richtungen, insbesondere bezogen auf die Horizontale nach oben und/oder nach unten erfolgen kann. Die Verformung kann plastisch und/oder elastisch sein. Vorzugsweise findet, Insbesondere bei einer Skinfolie eine thermoelastische Verformung beispielsweise in einem Dom vor oder in der Siegelstation statt, die reversibel ist und weitgehend rückgängig gemacht werden kann beim Anlegen ans Produkt, um Faltenbildung zu vermeiden. Bei einer Schrumpffolie kann beispielsweise eine im Folien-Herstellungsprozess eingefrorene Form durch Erwärmen im Wasserbad wieder in ihren Ursprungszustand rückgesetzt werden, der mögliche Rückschrumpf beträgt vorzugsweise bis zu 30-40%. Aber auch eine Folie mit einem geringeren oder größeren Rückschrumpf ist eine Schrumpffolie im Sinne der Erfindung.

In einer ersten Siegelstation wird die Folienbahn, insbesondere die Mittelfolienbahn in einem ersten Verbindungsbereich mit der Folienbahn, in die jede Verpackungsmulde geformt ist, verbunden, insbesondere durch Siegeln verbunden. Das Siegeln erfolgt unter Druck- und/oder Temperatureinfluss. Die Siegelstation weist ein Oberwerkzeug und ein Unterwerkzeug auf, wobei sich das Oberwerkzeug oberhalb der zu verbindenden Folienbahnen und das Unterwerkzeug unter diesen Folienbahnen befindet. Zum Siegeln können sich diese Werkzeuge aufeinander zu bewegen. Mindestens eines dieser Werkzeuge, insbesondere das Oberwerkzeug weist einen beheizten Teil auf, beispielsweise um die beiden Folienbahnen aneinander zu Siegeln und/oder um eine Folienbahn insbesondere die Mittelfolienbahn, unter Wärmeeinfluss zu Schrumpfen. Das ganz oder teilweise oder mit Temperaturgradient beheizte, vorzugsweise gegenüber einem nicht beheizten insbesondere äußeren Teil bewegliche innere Teil des Ober- und/oder Unterwerkzeugs kann beispielsweise als Dom-artiges Werkzeug zur Herstellung einer Skinlage fungieren, bei der die jeweilige Folienbahn auf das Verpackungsgut und/oder die Verpackungsmulde geschrumpft wird.

Des Weiteren weist die erste Siegelstation ein Schneidmittel auf, das eine Folienbahn, insbesondere die Mittelfolienbahn durchtrennt. Alternativ kann das Schneidmittel auch stromabwärts der ersten Siegelstation angeordnet sein, jedoch stromaufwärts der zweiten bzw. nächsten Siegelstation. Bei dem Schneidmittel kann es sich um ein Zahnmesser handeln. Alternativ oder zusätzlich ist das Schneidmittel ein Konturschneidmittel, das eine bestimmte Kontur, insbesondere eine geschlossene Kontur aus der Mittelfolienbahn ausschneidet. Insbesondere schneidet das Schneidmittel eine Kontur um den ersten Verbindungsbereich herum aus. Vorzugsweise ist pro Verpackungsmulde mindestens ein Schneidmittel vorgesehen. Jedes Schneidmittel kann individuell antreibbar sein. Erfindungsgemäß ist zwischen dem beheizten Teil des Ober- und/oder Unterwerkzeugs und dem Schneidmesser und/oder dem Bereich der Folie, in dem das Schneidmesser die Folie schneiden soll, eine Kühlung vorgesehen.

Zusätzlich kann eine Wärmeisolierung zwischen dem beheizten Teil und dem Schneidmesser vorgesehen sein. Bei der Wärmeisolierung kann es sich um eine Schicht einer Substanz mit einem geringen Wärmeleitkoeffizienten handeln. Diese Schicht kann beispielsweise eine Luftschicht sein. Dadurch wird die Temperatur der Folienbahn im Bereich des Schneidmittels nicht oder nur geringfügig erhöht, wodurch eine sichere Trennung der Folienbahn gewährleistet ist. Durch die Schicht kann ein nicht beheizter, nur geringfügig erwärmter oder gekühlter Teil des Oberwerkzeugs entstehen. Beispielsweise ist dieses Teil ein Klemmrahmen, der die Mittelfolienbahn und Unterfolienbahn zeitweise zusammenklemmt und für den Fall, dass ein Vakuum im Bereich des Unter- und/oder Oberwerkzeugs erzeugt werden soll, so beispielsweise eine dichte Vakuumkammer ermöglicht.

Vorzugsweise ist die Folienbahn, vorzugsweise die Mittelfolienbahn eine Schrumpf- und/oder Skinfolie, die sich unter Wärmeeinwirkung oder Abkühlung zusammenzieht. Besonders bevorzugt weisen das Ober- und/oder Unterwerkzeug einen beheizten Teil auf, der zum Siegeln der Mittelfolienbahn an die Unterfolienbahn und/oder zum Schrumpfen der Mittelfolienbahn vorgesehen ist. Um die Schrumpf-/Skinfolie zu recken und/oder zu Formen und/oder die Wärmeübertragung zwischen Werkzeug und Schrumpf-/Skin-folie zu verbessern, kann es vorteilhaft sein Mittel vorzusehen um zwischen der Schrumpf-/Skinfolie und dem Werkzeug einen Unterdruck und oder einen Überdruck, der die Schrumpf-/Skinfolie in Richtung des Werkzeugs drückt, zu erzeugen.

Gemäß einer bevorzugten Ausführungsform der vorliegenden Erfindung weist die Verpackungsmaschine eine zweite Siegelstation auf, die eine weitere Folienbahn, die sogenannte Oberfolienbahn, in einem zweiten Verbindungsbereich an die Folienbahn, in der die Verpackungsmulde vorgesehen ist, siegelt, wobei sich der erste und der zweite Verbindungsbereich zumindest teilweise, insbesondere vollständig nicht überdecken. Vorzugsweise ist der zweite Verbindungsbereich als Ring um den ersten Verbindungsbereich herum vorgesehen, wobei besonders bevorzugt zwischen dem ersten und dem zweiten Verbindungsbereich ein Abstand vorgesehen ist. Die Oberfolienbahn schließ das Verpackungsvolumen der Verpackungsmulde vorzugsweise vollständig ab und definiert gleichzeitig ein zweites Verpackungsvolumen für ein weiteres Verpackungsgut, das in der jeweiligen Verpackungsmulde vorgesehen wird.

Vorzugsweise befinden sich zwischen der ersten und der zweiten Siegelstation ein zweiter Einleger, der ein weiteres Produkt in die bereits teilgefüllte Verpackungsmulde und/oder auf die Mittelfolie platziert. Des Weiteren kann zwischen der ersten und der zweiten Siegelstation eine Folienaufwicklung vorgesehen sein, die die Reste der Mittelfolienbahn aufwickelt, beispielsweise ein sogenannter Restgitterwickler.

Gemäß einer bevorzugten Ausführungsform der vorliegenden Erfindung ist der erste Verbindungsbereich peelbar und/oder der zweite Verbindungsbereich peelbar und/oder wiederverschließbar und/oder ein Wiederverschlussmittel vorgesehen, mit dem insbesondere die Folienbahn nach dem Öffnen wieder an der Verpackungsmulde befestigbar ist. Eine peelbare Verbindung im Sinne der Erfindung ist eine Verbindung, die mit menschlichen Kräften lösbar ist. Derartige Verbindungen von peelfähig gestaltbaren Folienkombinationen können beispielsweise durch eine bestimmte Temperatur- und/oder Druckauswahl an dem Siegelwerkzeug erzielt werden. Der zweite Verbindungsbereich kann wiederverschließbar vorgesehen werden, in dem die dort vorgesehene Verbindung so vorgesehen ist, dass die Oberfolie auch nach dem erstmaligen Öffnen dort wieder in einem gewissen Umfang haftet. Alternativ oder zusätzlich kann ein Wiederverschlussmittel vorgesehen sein, mit dem die Oberfolie nach dem Öffnen an der Verpackungsmulde befestigbar ist.

Wie bereits ausgeführt, können mehrere Verpackungen gleichzeitig hergestellt werden. Da die erfindungsgemäße Verpackungsmaschine vorzugweise taktweise arbeitet, werden vorzugsweise mehrere Verpackungsmulden mit einer ersten und/oder zweiten Folienbahn verbunden. Insbesondere vor der Verbindung mit einer Folienbahn ist vorzugsweise insbesondere in der ersten Siegelstation ein Vakuum erzeugbar, insbesondere um die Anlage der Mittelfolienbahn an dem Verpackungsgut und/oder der Verpackungsmulde zu verbessern. Besonders bevorzugt ist dafür pro herzustellender Verpackung eine separate Vakuumkammer mit vorzugsweise separatem Vakuumanschluss vorgesehen, deren Wandung vorzugsweise keine Verbindung zu benachbarten Vakuumkammern hat oder eine oder mehrere Verbindungen an Stellen, so dass infolge dessen kein schädlicher Wärmeeintrag auf die zu schneidende Folie im Bereich des Schneidmittels erfolgt. Dadurch werden insbesondere Querströmungen innerhalb des jeweiligen Siegelwerkzeugs und/oder ungewollte Wärmestrahlung verhindert, die die Temperatur der zu schneidenden Folie im Bereich des Schneidmittels erhöhen könnten und/oder um die Folienbahn gezielt zu kühlen.

Die Oberfolienbahn kann unverformt und/oder mindestens partiell nach unten und/oder nach oben verformt sein.

In der zweiten Siegelstation erfolgt das Siegeln der Oberfolienbahn auf die Folienbahn, in die die Verpackungsmulden geformt sind, vorzugsweise ohne, dass dabei auch die Mittelfolienbahn mitgesiegelt wird.

Weiterhin bevorzugt weist die erfindungsgemäße Verpackungsmaschine vorzugsweise zwei getrennte Mittel, beispielsweise Stanzen, auf, um Begasungsöffnungen in die Mittel- und die Unterfolienbahn einzubringen. Durch diese Begasungsöffnungen kann ein Gasaustausch zwischen der Mittenfolienbahn und der Unterfolienbahn sowie zwischen der Mittenfolienbahn und der Oberfolienbahn erfolgen. Vorzugsweise ist das erste Mittel vor der ersten Siegelstation und das zweite Mittel nach der ersten Siegelstation vorgesehen.

Weiterhin bevorzugt weist die erfindungsgemäße Verpackungsmaschine mindestens ein Mittel, vorzugsweise eine Düse bzw. Düsenleiste, auf, das als Begasungsöffnungen fungiert. Durch diese Begasungsöffnungen kann alternativ oder zusätzlich ein Gasaustausch zwischen der Mittenfolienbahn und der Unterfolienbahn sowie zwischen der Mittenfolienbahn und der Oberfolienbahn erfolgen. Vorzugsweise ist mindestens ein, vorzugsweise zwei Mittel an der ersten Siegelstation und mindestens ein weiteres, vorzugsweise zwei Mittel an der zweiten Siegelstation vorgesehen. Solche Düsen sind beispielsweise in der DE 10 2006 020 360 A1 der hiesigen Anmelderin als sogenannte Längsdüsen offenbart, oder vorzugsweise als Querdüsen, die an der stromaufwärtigen Seite der Siegelstation angeordnet sind.

Weiterhin bevorzugt weist die erfindungsgemäße Verpackungsmaschine stromabwärts von der zweiten Siegelstation eine Vereinzelungsstation auf, in der die jeweiligen fertiggestellten Verpackungen aus der Unter- und Oberfolienbahn herausgeschnitten werden.

Als eine weitere Ausführungsform der vorliegenden Erfindung können die hier interessierenden Mehrlagenfolienverpackungen auch zwei oder mehr Mittenfolienbahnen beinhalten. Bei allen Ausführungsformen kann die Oberfolie auch geformt sein, entweder nach unten geformt, um das oberste eingelegte Produkt sicher zu halten und gleichzeitig eine stabilere Gesamtpackung zu erhalten oder nach oben geformt, um eine ansprechendere Gestaltung der gesamten Packung zu erreichen.

Bei den hier interessierenden Folienbahnen kann es sich um jede beliebige dem Fachmann im Bereich der Lebensmitteltechnik bekannte, Folie handeln. Beispielsweise ist die Folie eine Weich- oder Hartfolie aus PP, PA/PE, PVC, A-Pet, oder einem sinnvollen Gemisch bzw. stoffschlüssig miteinander verbundenen Lagen aus diesen Komponenten.

Die Aufgabe wird außerdem mit einer Verpackung mit einer Verpackungsmulde gelöst, an die eine erste Folienbahn in einem ersten Verbindungsbereich und eine zweite Folienbahn in einem zweiten Verbindungsbereich gesiegelt ist, wobei die Verbindungsbereiche nicht deckungsgleich sind.

Die zu diesem Gegenstand der vorliegenden Erfindung gemachten Ausführungen gelten für die anderen Gegenstände der vorliegenden Erfindung gleichermaßen und umgekehrt.

Merkmale aus der Offenbarung dieses Gegenstandes können in andere Gegenstände der vorliegenden Erfindung übernommen werden und umgekehrt.

Die vorliegende Erfindung betrifft eine Verpackung, die vorzugsweise aus mehreren Kunststofffolien hergestellt ist. Insbesondere besteht die Verpackung aus einer Verpackungsmulde, die vorzugsweise in eine Folienbahn, insbesondere die sogenannte Unterfolienbahn geformt, vorzugsweise tiefgezogen worden ist. Diese Verpackungsmulde wird mit einer ersten Folienbahn, insbesondere eine Kunststofffolienbahn, in einem ersten Verbindungsbereich verbunden, insbesondere nachdem die Verpackungsmulde mit einem ersten Verpackungsgut gefüllt worden ist, das vorzugsweise auf dem Boden der Verpackungsmulde aufliegt. Die erste Folienbahn kann, zumindest partiell, plan, geformt und/oder gereckt sein. Die Formung kann sich in eine oder mehrere Richtungen erstrecken. Bei der ersten Folienbahn kann es sich um eine Schrumpf-/Skinfolie handeln. Durch die Verpackungsmulde wird vorzugsweise ein erster Verpackungsbereich eingegrenzt, der vorzugsweise hermetisch von dem restlichen Verpackungsbereich der Verpackungsmulde abgeschlossen ist. Vorzugsweise erfolgt die Verbindung zwischen der ersten Folienbahn und der Verpackungsmulde mittels Siegeln, wobei die Siegelung vorzugsweise peelbar, d.h. mit menschlichen Kräften lösbar ist. Der erste Verbindungsbereich kann wiederverschließbar ausgebildet werden.

Des Weiteren ist an die Verpackungsmulde eine zweite Folienbahn gesiegelt, wodurch vorzugsweise ein zweiter Verpackungsbereich entsteht, der von der Umwelt durch die zweite Folienbahn abgeschlossen ist. Dieser Verpackungsbereich kann ebenfalls mit einem zweiten Verpackungsgut befüllt werden, das vorzugsweise auf der ersten Folienbahn aufliegt und vorzugsweise von dem ersten Verpackungsgut unterschiedlich ist. Bei der erfindungsgemäßen Verpackung handelt es sich demnach vorzugsweise um eine sogenannte Mehrlagenverpackung.

Erfindungsgemäß ist nun vorgesehen, dass der erste und der zweite Verbindungsbereich nicht deckungsgleich sind. Vorzugsweise überlappen sich die Verbindungsbereiche an keiner Stelle. Die Verbindungsbereiche weisen vorzugsweise an keiner Stelle drei Lagen an Folienbahnen auf. Die Erfindung hat den Vorteil, dass die Folienbahnen getrennt voneinander von der Verpackungsmulde entfernt und/oder wiederverschlossen werden können. Dadurch, dass der jeweilige Verbindungsbereich immer nur eine Folienbahn mit der Verpackungsmulde verbunden wird, können die dortigen Siegelbedingungen, insbesondere die Siegeltemperatur, der Siegeldruck und/oder die Siegeldauer exakt auf die gewünschten Werte eingestellt werden.

Die zweite Folienbahn kann zumindest partiell plan, zumindest partiell geformt und/oder zumindest partiell gereckt sein

Der zweite Verbindungsbereich kann peelfähig und/oder wiederverschließbar ausgeführt werden.

Vorzugsweise unterteilt die erste Folienbahn, die sogenannte Mittelfolienbahn, die Verpackungsmulde in einen ersten und einen zweiten Aufnahmebereich für jeweils ein Verpackungsgut.

Vorzugsweise ist mindestens eine Folienbahn, vorzugsweise die erste Folienbahn, die Mittelfolienbahn, schrumpfbar/dehnbar. Dies kann durch die Zusammensetzung und/oder Fertigung der Folienbahn und/oder deren Behandlung auf einer Verpackungsmaschine erreicht werden. Vorzugsweise erfolgt das Schrumpfen unter Temperatur- und/oder Druckeinfluss, indem insbesondere in dem abzuschließenden Verpackungsvolumen ein Unterdruck erzeugt wird.

Vorzugsweise ist mindesten ein Verbindungsbereich peelbar, d.h. mit menschlichen Kräften lösbar, vorgesehen.

Gemäß einer bevorzugten Ausführungsform ist zwischen der Verpackungsmulde und mindestens einer der Folienbahnen ein Wiederverschlussmittel vorgesehen. Dieses Wiederverschlussmittel kann bereits in einer der Verbindungsbereiche vorgesehen sein, indem der Verbindungsbereich auch nach dem Öffnen noch eine gewisse kraft- und/oder stoffschlüssige Verbindungkraft aufweist, so dass mindestens eine Folienbahn auch nach dem Öffnen wieder den jeweiligen Verpackungsbereich abdeckend an der Verpackungsmulde befestigt werden kann. Vorzugsweise ist nicht der gesamte Verbindungsbereich peelbar und/oder wiederverschließbar ausgeführt, sondern vorzugsweise teilweise als feste Verbindung vorgesehen, die mit menschlichen Kräften nicht mehr lösbar ist. Dadurch kann verhindert werden, dass eine Folienbahn vollständig von der Verpackungsmulde abgezogen wird. Diese bevorzugte Ausführungsform ist insbesondere für die zweite Folienbahn, die das Verpackungsvolumen der Verpackungsmulde vorzugsweise vollständig abdeckt vorteilhaft.

Vorzugsweise sind der erste und der zweite Verbindungsbereich auf einer Ebene, insbesondere einer horizontalen Ebene, vorgesehen.

Vorzugsweise ist zwischen dem ersten und dem zweiten Verbindungsbereich eine Einbuchtung vorgesehen. Diese Einbuchtung kann das Messermittel aufnehmen, wenn dieses beispielweise die erste Folienbahn beschneidet, beispielsweise einen Konturenschnitt durchführt.

Im Folgenden wird die Erfindung anhand der Figuren erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Verpackungsmaschine.
- **Figuren 2 und 3**: zeigen die erfindungsgemäße Verpackung
- **Figuren 4 - 6**: zeigen Details der Siegelstation

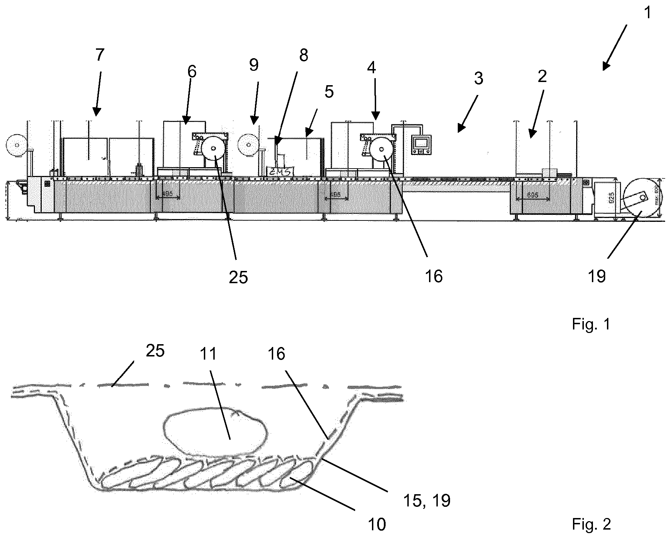

Figur 1 zeigt die erfindungsgemäße Verpackungsmaschine 1. Entlang dieser Verpackungsmaschine wird, insbesondere taktweise, eine Unterfolienbahn 19, beispielsweise mit zwei rechts und links der Unterfolienbahn angeordneten Transportketten, transportiert. In diese Unterfolienbahn 19 wird zunächst mittels einer Formstation 2 eine Verpackungsmulde 15, beispielsweise durch Tiefziehen, insbesondere durch Tiefziehen, eingeformt. Vorzugsweise wird jedoch bei einem Takt ein Format von mehreren Verpackungsmulden hergestellt. Die folgenden Ausführungen gelten also für ein Format von Verpackungsmulden analog, es sei denn es ist anders beschrieben. Stromabwärts der Formstation 2 ist ein erster Einleger 3 vorgesehen, der ein erstes Produkt in die Verpackungsmulde 16 einlegt, wobei das erste Produkt das Verpackungsvolumen der jeweiligen Verpackungsmulde vorzugsweise nur teilweise auffüllt. Der Einleger arbeitet vorzugsweise automatisch. Es handelt sich beispielsweise um ein Einlegeband und/oder einen Pick and Place Roboter. Sodann wird die befüllte Verpackung mit einem oder mehreren Takten in die erste Siegelstation transportiert, in der eine erste Folienbahn, hier die Mittenfolienbahn 16 an die Unterfolienbahn 19 bzw. die Verpackungsmulde 16, insbesondere peelfähig, gesiegelt wird. Insbesondere vor dem Siegeln kann die Mittenfolienbahn zumindest lokal verformt und/oder lokal gereckt werden. Vorzugsweise ist die Mittelfolienbahn 16 per se schrumpffähig oder wird durch recken, insbesondere in der ersten Siegelstation schrumpffähig gemacht. Ist ein Gasaustausch und/oder ein Unterdruck zwischen der Unterfolienbahn und der Mittenfolienbahn vor dem Siegeln gewünscht, werden vorzugsweise stromaufwärts der ersten Form-/Siegelstation eine oder mehrere Ausnehmungen in die Unterfolienbahn, beispielsweise durch Stanzen, eingebracht, durch die der Gasaustausch vorzugsweise erfolgt. Alternativ oder zusätzlich können die Verpackungsmulden vor dem Siegeln via Querdüse evakuiert und/oder begast werden. Die erste Siegelstation weist ein Schneidmittel 8 auf, das die Verpackungsmulde 15 aus der Mittelfolienbahn 16 ausschneidet. Das Schneidmittel 8 kann eine Zahnmesserstanze oder Komplettschnittstanze sein. Die Folienbahn 19 bleibt dabei vorzugsweise intakt. Das verbleibende Gitter der Folienbahn 16 wird mittels einer Restgitterwicklung 9 aufgewickelt. Stromabwärts der ersten Form-/Siegelstation kann ein zweiter Einleger 5 vorgesehen sein, der ein zweites Produkt auf die Mittenfolienbahn einlegt. Die Ausführungen zu dem ersten Einleger gelten für den zweiten Einleger analog. Anschließend kann in einer stromabwärts von dem zweiten Einleger 5 vorgesehenen zweiten Siegelstation 6 eine weitere Folienbahn 25, die Oberfolienbahn, an die Folienbahn 19 bzw. die Verpackungsmulde 15 gesiegelt werden. Ist ein Gasaustausch und/oder Unterdruck zwischen der Oberfolienbahn 25 und der Mittenfolienbahn 15 vor dem Siegeln gewünscht, müssen stromaufwärts von der zweiten Siegelstation Öffnungen in die Mittenfolienbahn eingearbeitet, insbesondere gestanzt, werden. Abschließend werden die Verpackungen in einer Vereinzelungsstation 7 aus den Folienbahnen 19 und 25 vereinzelt. In der Vereinzelungsstation werden die Packungen vorzugsweise erst quer, dann längs geschnitten und dadurch vereinzelt.

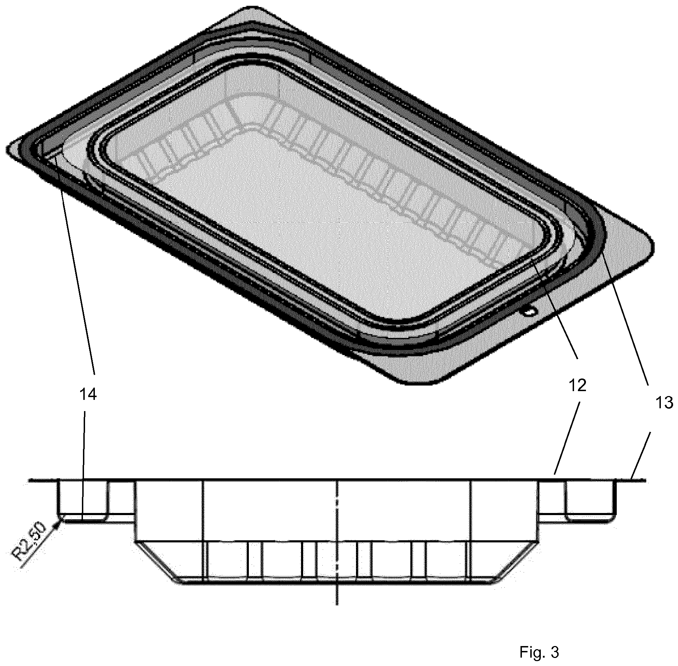

Mit der erfindungsgemäßen Verpackungsmaschine kann man eine Mehrlagenverpackung herstellen wie sie beispielhaft in den Figuren 2 und 3 dargestellt ist. Diese Verpackung ist vorzugsweise aus Kunststofffolien, hier drei Kunststofffolien, einer Unterfolie 19, einer Mittelfolie 16 und einer Oberfolie 25 hergestellt. In die Unterfolienbahn 19 wird die Verpackungsmulde 15 eingeformt und dann insbesondere der Boden dieser mit einem ersten Verpackungsgut 10 befüllt. Danach wird die Folienbahn 16, die mittlere Folienbahn, an die Verpackungsmulde in einem ersten Verbindungsbereich 12 gesiegelt, hier an einen, zumindest im Wesentlichen horizontal verlaufenden Flansch der Verpackungsmulde. Bei der Folienbahn 16 handelt es sich um eine Schrumpffolie oder Skinfolie, mit der das erste Verpackungsgut als sogenannte Skinverpackung verpackt wird, weil sich die Folienbahn 16 wie eine Haut an die Innenseite der Verpackung und/oder das erste Verpackungsgut anlegt. Dieses Schrumpfen und/oder dehnen beziehungsweise Anlegen kann durch einen Unterdruck zwischen den Folienbahnen 16, 19 begünstigt werden und erfolgt unter Erwärmung der Folienbahn 16. Das Schrumpfen der Folienbahn 16 kann durch ein vorheriges Formen, insbesondere Recken der Folie von dem ersten Verpackungsgut weg begünstigt werden. Das Schrumpfen erfolgt in der Siegelstation bevor, während und/oder nachdem die beiden Folienbahnen 16, 19 verbunden worden sind. Die Oberfolie kann zumindest lokal geformt und/oder zumindest lokal plan sein. Die Folienbahn teilt ein erstes Teilvolumen des gesamten Verpackungsvolumens der Verpackungsmulde 15 hermetisch ab. Vorzugsweise ist die Verbindung zwischen den Folienbahnen 16, 19 peelbar. Danach kann die Verpackung mit einem zweiten Verpackungsgut befüllt und mit einer Oberfolienbahn 25 verschlossen werden, die mit der Folienbahn 19 bzw. der Verpackungsmulde in einem zweiten Verbindungsbereich 13, insbesondere durch Siegeln verbunden wird. Auch der zweite Verbindungsbereich 13 ist vorzugsweise in einem horizontalen Flanschbereich der Verpackungsmulde was insbesondere Figur 3 entnommen werden kann. Weiterhin kann Figur 3 entnommen werden, dass zwischen den beiden Verbindungsbereichen vorzugsweise eine Nut 14 vorgesehen ist. Die beiden Verbindungsbereiche 12, 13 sind vorzugsweise ringförmig gestaltet, wobei der Verbindungsbereich 13 den Verbindungsbereich 12 umschließt ohne, dass sich die beiden überdecken. Vorzugsweise ist die Folienbahn 25 wiederverschließbar an der Folienbahn 19 bzw. der Verpackungsmulde vorgesehen. Dieser Wiederverschluss kann durch einen Form- Kraft- und/oder Stoffschluss erfolgen. Dadurch kann das zweite Verpackungsgut 11 aus der Verpackung entnommen und die Folienbahn 16 entfernt werden, so dass der Verbraucher Zugang zu dem ersten Verpackungsgut 10 erhält. Diese Verpackungsgut kann ein Verbraucher dann teilweise entnehmen und dann die Verpackung mit der Folienbahn 25 wiederschließen.

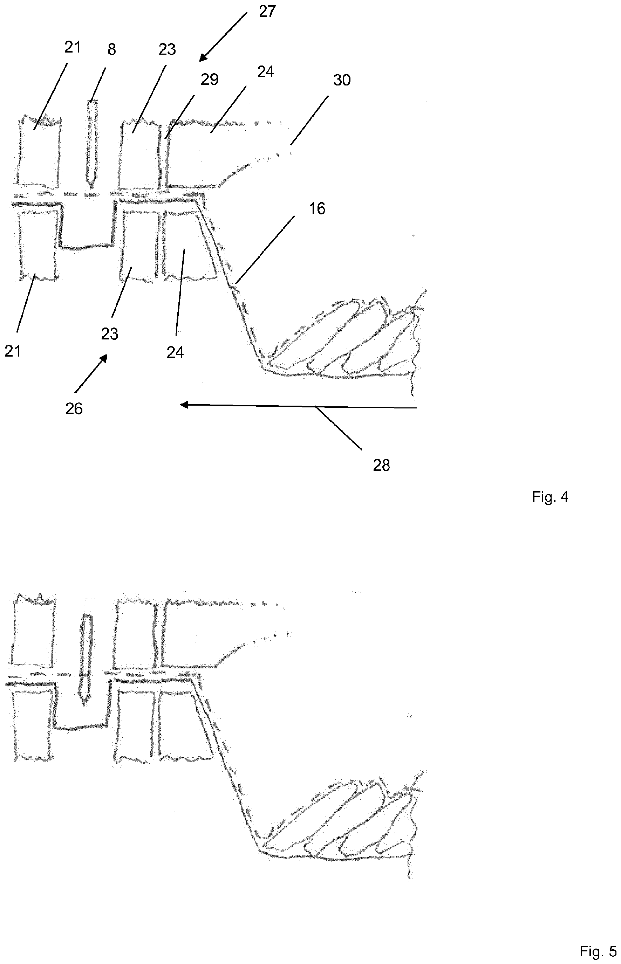

Die Figuren 4 - 6 zeigen Details der ersten Siegelstation 4, insbesondere des Oberwerkzeugs 27 und des Unterwerkzeugs 26. Insbesondere das Oberwerkzeug 27 weist einen beheizbares Teil 24 auf, mit dem der erste Verbindungsbereich 12 hergestellt werden kann und das einen, hier domförmigen, beheizten Zentralbereich aufweist, in den die Folienbahn 16 gezogen und7oder gedrückt wird und sich dabei reckt und erwärmt. Dieses Recken und Erwärmen führt dann zum Schrumpfen der Folie um das erste Verpackungsgut 10 herum. Der Fachmann versteht, dass die Folienbahn 16 zum Schrumpfen ggf., auch nur erwärmt werden muss. Vorzugsweise ist das Teil 24 separat von mindestens einem weiteren Teil des Oberwerkzeugs oder des Unterwerkzeugs bewegbar. Des Weiteren weist das Ober- und/oder das Unterwerkzeug ein weiteres Teil 23, beispielsweise einen Klemmrahmen auf, der die beiden Folienbahnen 16, 19 zusammenklemmt. Zwischen den Teilen 23 und 24 ist nun erfindungsgemäß eine Isolierung 29, hier in Form eines Luftspaltes vorgesehen, der verhindert oder vermindert, dass sich das Teil 23 zu stark erwärmt, was zu einer unzulässigen Erwärmung der Folienbahn 16 in diesem Bereich führen würde.

Zusätzlich wird das Teil 23 gekühlt oder das Teil 23 wird nur gekühlt ohne dass eine Isolierung zwischen den Teilen 23, 24 vorhanden ist. Des Weiteren verfügt die erste Siegelstation über ein Schneidmittel 8, das vorzugsweise einen Konturenschnitt um den ersten Verbindungsbereich herum durch die Folienbahn 26 durchführt. Dafür kann die Folienbahn durch ein weiteres Klemmmittel 21 geklemmt werden. Da der erwärmte Bereich, wie durch den Pfeil 28 symbolisiert, begrenzt ist, ist die Folienbahn 16 im Bereich des Schneidmittels 8 vergleichsweise kalt, was den Schnitt des Schneidmittels 8 vereinfacht bzw. erst ermöglicht, ohne dass sich die Folienbahn 16 dehnt.

Das Durchtrennen der Folienbahn 16 ist in Figur 5 dargestellt. Das Schneidmittel 8 tritt beim Durchschneiden der Folienbahn 16 in die Nut 14 ein.

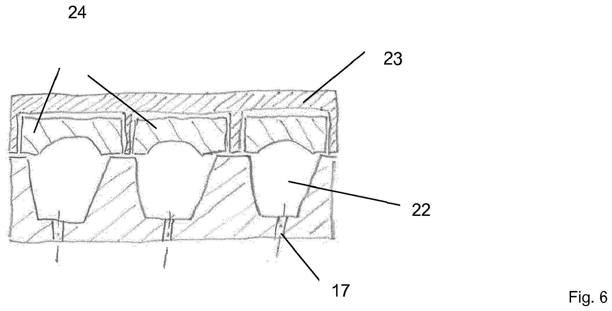

In Figur 6 ist ein weiteres Detail des ersten Siegelwerkzeugs zu sehen. In dem vorliegenden Fall wird ein Format bestehend aus drei Verpackungen hergestellt. Es ist deutlich zu erkennen, dass jede Verpackungsmulde eine eigene Kammer aufweist, die wiederum jeweils einen eigenen Vakuumanschluss 17 aufweist, so dass keine oder nur eine verminderte Querströmung entlang des Oberwerkzeugs stattfindet, die dann die Folie im Bereich des Schneidmittels in unerwünschte Weise aufheizen könnte.

### Bezugszeichenliste:

- 1: Verpackungsmaschine
- 2: Formstation
- 3: erster Einleger
- 4: erste Siegelstation
- 5: zweiter Einleger
- 6: zweite Siegelstation
- 7: Vereinzelung
- 8: Schneidmittel / Zahnmesserstanze / Komplettschnittstanze ZMS
- 9: Restgitterwicklung
- 10: erstes Verpackungsgut
- 11: zweites Verpackungsgut
- 12: erster Verbindungsbereich, erste Siegelnaht
- 13: zweiter Verbindungsbereich, zweite Siegelnaht
- 14: Einbuchtung, Rücksprung
- 15: Verpackungsmulde
- 16: Folienbahn, Mittenfolienbahn
- 17: Vakuumanschluss
- 18: Gasaustausch
- 19: Unterfolienbahn
- 20: Gasaustauschkanal
- 21: Klemmrahmen
- 22: Kammer, Nutzen
- 23: unbeheizter und/oder gekühlter Teil des ersten Siegelwerkzeugs
- 24: beheizter und/oder gekühlter Teil des ersten Siegelwerkzeugs
- 25: Oberfolienbahn
- 26: Unterwerkzeug
- 27: Oberwerkzeug
- 28: beheizter Bereich der mittleren Folienbahn 16
- 29: Kühlung
- 30: Zentralbereich, domförmiger Zentralbereich

## Patentansprüche

1. Verpackungsmaschine mit:
- einer Formstation (2), die eine Verpackungsmulde (15) in eine Folienbahn (19) einformt,
- einem ersten Einleger (3), der die Verpackungsmulde (15) mit einem ersten Verpackungsgut (10) befüllt und
- einer ersten Siegelstation (4), die eine Folienbahn (16) in einem ersten Verbindungsbereich (12) an die Folienbahn (19) siegelt und die ein Oberwerkzeug (27) und ein Unterwerkzeug (26) aufweist, wobei mindestens ein Werkzeug (26, 27) einen beheizten Teil (24) aufweist und mit einem Schneidmittel (8) versehen ist,
**dadurch gekennzeichnet, dass** zwischen dem beheizten Teil (24) und dem Schneidmesser (8) eine Kühlung (29) vorgesehen ist.

2. Verpackungsmaschine nach Anspruch 1, **dadurch gekennzeichnet, dass** die Folienbahn (19) vorzugsweise eine Schrumpf-/Skin-Folie ist, die sich unter Wärmeeinwirkung zusammenzieht und/oder dehnt und dass der beheizte Teil (24) des Oberwerkzeugs (27) zum Siegeln der Folienbahn (16) an die Folienbahn (19) und/oder zum Schrumpfen und/oder Dehnen der Folienbahn (16) vorgesehen ist.

3. Verpackungsmaschine nach einem der voranstehenden Ansprüche, **dadurch gekennzeichnet, dass** sie eine zweite Siegelstation aufweist, die eine weitere Folienbahn (25) in einem zweiten Verbindungsbereich (13) an die Folienbahn (19) siegelt, wobei sich der erste und der zweite Verbindungsbereich zumindest teilweise, insbesondere vollständig nicht überdecken.

4. Verpackungsmaschine nach einem der voranstehenden Ansprüche, **dadurch gekennzeichnet, dass** der erste Verbindungsbereich peelbar und/oder der zweite Verbindungsbereich wiederverschließbar vorgesehen ist und/oder ein Wiederverschlussmittel vorgesehen ist, mit dem insbesondere die Folienbahn (25) nach dem Öffnen wieder an der Verpackungsmulde (15) befestigbar ist.

5. Verpackungsmaschine nach einem der voranstehenden Ansprüche, **dadurch gekennzeichnet, dass** mehrere Verpackungen gleichzeitig herstellbar sind und dass in der ersten Siegelstation ein Vakuum erzeugbar ist

6. Verpackungsmaschine nach Anspruch 5, **dadurch gekennzeichnet, dass** pro herzustellender Verpackung eine separate Vakuumkammer vorgesehen ist.

## Claims

1. Packaging machine having:
- a forming station (2), which forms a pack cavity (15) in a film web (19),
- a first inserting means (3), which fills the pack cavity (15) with a first product for packaging (10), and
- a first sealing station (4), which seals a film web (16) to the film web (19) in a first connecting region (12) and has a top tool (27) and a bottom tool (26), wherein at least one tool (26, 27) has a heated part (24) and is provided with a cutting means (8),
**characterized in that** provision is made of a cooling means (29) between the heated part (24) and the cutting blade (8).

2. Packaging machine according to Claim 1, **characterized in that** the film web (19) is preferably a shrink-wrapping/skin film, which, under the action of heat, contracts and/or stretches, and **in that** the heated part (24) of the top tool (27) is intended for sealing the film web (16) to the film web (19) and/or for shrinking and/or stretching the film web (16).

3. Packaging machine according to either of the preceding claims, **characterized in that** it has a second sealing station, which seals a further film web (25) to the film web (19) in a second connecting region (13), wherein the first and second connecting regions at least partially, in particular completely, do not overlap.

4. Packaging machine according to one of the preceding claims, **characterized in that** the first connecting region is provided so as to be peelable and/or the second connecting region is provided so as to be reclosable, and/or provision is made of a re-closing means by way of which in particular the film web (25) is able to be fastened to the pack cavity (15) again after being opened.

5. Packaging machine according to one of the preceding claims, **characterized in that** multiple packs are simultaneously producible, and **in that** a vacuum is able to be generated in the first sealing station.

6. Packaging machine according to Claim 5, **characterized in that**, for each pack to be produced, provision is made of a separate vacuum chamber.

## Revendications

1. Machine d'emballage avec :
- un poste de formage (2), qui forme une auge d'emballage (15) dans une bande de film (19),
- un premier dispositif d'insertion (3) qui remplit l'auge d'emballage (15) avec un premier produit à emballer (10) et
- un premier poste de scellage (4) qui scelle une bande de film (16) dans une première zone de liaison (12) à la bande de film (19) et qui présente un outil supérieur (27) et un outil inférieur (26), au moins un outil (26, 27) présentant une partie chauffée (24) et étant pourvu d'un moyen de coupe (8),
**caractérisé en ce qu'**un refroidissement (29) est prévu entre la partie chauffée (24) et la lame de coupe (8).

2. Machine d'emballage selon la revendication 1, **caractérisée en ce que** la bande de film (19) est de préférence un film rétractable/peau qui se contracte et/ou s'étire sous l'effet de la chaleur et **en ce que** la partie chauffée (24) de l'outil supérieur (27) est prévue pour sceller la bande de film (16) à la bande de film (19) et/ou pour rétracter et/ou étirer la bande de film (16).

3. Machine d'emballage selon l'une quelconque des revendications précédentes, **caractérisée en ce qu'**elle présente un deuxième poste de scellage qui scelle une autre bande de film (25) dans une deuxième zone de liaison (13) sur la bande de film (19), la première et la deuxième zone de liaison ne se recouvrant pas au moins partiellement, notamment entièrement.

4. Machine d'emballage selon l'une quelconque des revendications précédentes, **caractérisée en ce que** la première zone de liaison est prévue de manière à pouvoir être pelée et/ou la deuxième zone de liaison est prévue de manière à pouvoir être refermée et/ou un moyen de refermeture est prévu, avec lequel la bande de film (25) peut notamment être à nouveau fixée sur l'auge d'emballage (15) après l'ouverture.

5. Machine d'emballage selon l'une quelconque des revendications précédentes, **caractérisée en ce que** plusieurs emballages peuvent être fabriqués simultanément et **en ce qu'**un vide peut être généré dans le premier poste de scellage.

6. Machine d'emballage selon la revendication 5, **caractérisée en ce qu'**une chambre à vide séparée est prévue pour chaque emballage à fabriquer.
